# EUROPÄISCHE PATENTANMELDUNG

(11) **EP 0 860 109 A2**
(43) Veröffentlichungstag der Anmeldung: **26.08.1998**
(21) Anmeldenummer: 98890048.6
(22) Anmeldetag: 19.02.1998
(51) Int. Cl.: A01G 1/08, E04H 17/14, C05F 17/02, E04H 7/28

(54) **Fertigteile für Bauwerke und Bauwerk hiervon**

(30) Priorität: 20.02.1997 AT 283/97
(71) Anmelder: Ebenseer Betonwerke AG, 1040 Wien (AT)
(72) Erfinder: Feike, Herbert, A-2486 Siegersdorf (AT); Feike, Walter, A-2763 Piesting (AT)
(74) Vertreter: Szász, Tibor, Dipl.-Ing.

(57) **Zusammenfassung**

Die Erfindung betrifft Fertigteile für einfache Bauwerke aus Betonplatten (1) mit mindestens zwei Schlitzen (1a,1b) und/oder aus Verbindungssteinen (11), sowie mittels dieser Fertigteile erstellte Bauwerke.

Ziel der Erfindung ist die Schaffung von Fertigteilen, die nach ihrer Herstellung mit Eigenmitteln leicht transportiert und in Selbstbau zu einem Bauwerk zusammengestellt werden können.

Erreicht wird das gesetzte Ziel erfindungsgemäß durch bis zu 200 cm langen Betonplatten (1), mit nach innen konisch verlaufenden Schlitzen (1a,1b), wobei die gegebenenfalls vorhandenen Verbindungssteine (11) jeweils mit einer länglichen Aussparung (11a) versehen sind, deren zumindest schmalseitigen Innenwände dem Verlauf der Schlitze (1a,1b) entsprechend abgeschrägt sind.

## Beschreibung

Die Erfindung betrifft Fertigteile für ein Bauwerk nach dem Oberbegriff des Anspruches 1 sowie ein Bauwerk, nach dem Oberbegriff des Anspruches 6.

Aus der DE-AS 1784862 ist ein aus Fertigteilen zusammengesetzter Flüssigkeitsbehälter mit einigen die Seitenwände bildenden, ineinandergreifenden Wandplatten, die an ihrer Oberkante nach oben offene Schlitze aufweisen, wobei jedem Schlitz der einen Seitenwand ein entsprechender Schlitz der anderen Seitenwand gegenüberliegt, bekannt. Allerdings betrifft diese Offenbarung, wie schon der Titel angibt, einen Flüssigkeitsbehälter, der aus vorgefertigten Bauteilen, vor allem von Betonpaneelen besteht. Sowohl die Herstellung als auch der Transport und die Montage ist demnach an mit solchen Fertigteilen verbundenen Manipulationen gebunden. Die Herstellung der erfindungsgemäßen Betonplatte bildet keinen Gegenstand der vorliegenden Erfindung, so daß sich das weitere Eingehen auf die Herstellung von Betonpaneelen erübrigen dürfte. Der Transport erfolgt, wie bekannt, mittels LKW, oft mittels besonderer Anhänger, z.B. Tieflader, auf welche die Paneele unter Verwendung von einem Kran aufgeladen werden. Der Zusammenbau an der Baustelle erfolgt ebenfalls durch Verwendung von Baumaschinen. Des weiteren ist der Zusammenbau an übliche, bei Betonbauwerken zur Anwendung gelangenden Verbindungs- und Haltemittel gebunden. Auch die in der obigen DE-AS zum Stand der Technik genannten Druckschriften (FR-PS 1109494, US-PS 1740011) lassen die vorangehend erwähnten Maßnahmen erkennen.

Die Erfindung hat sich nun die Aufgabe gestellt, Betonplatten der eingangs genannten Art für den Eigenbau und auch für den Transport mit PKW oder mit Transportern herzustellen. Des weiteren soll der Zusammenbau mit einfachen Mitteln bewerkstelligt werden können, auf jeden Fall ohne Verwendung von bei Stahlbetonkonstruktionen üblichen Mitteln.

Gelöst wird die gestellte Aufgabe erfindungsgemäß durch die im Anspruch 1 enthaltenen kennzeichnenden Merkmale.

Die konische Ausgestaltung der Schlitze ermöglicht nicht nur ein leichtes Herausnehmen aus der Form, sondern auch eine sichere Verankerung der einzelnen, miteinander gegebenenfalls unter Verwendung von Verbindungssteinen verbundenen Betonplatten, ohne daß hiefür Verbindungsmaterialien erforderlich wären. Dadurch wird nicht nur der Zeit- und Kostenaufwand wesentlich reduziert; auch die Möglichkeit eines Umsetzens wird gewährleistet. Dadurch, daß die Länge der einzelnen Betonplatten mit 200 cm und die Höhe mit 40 cm begrenzt ist, entstehen handliche Bauteile. Die erfinderische Tätigkeit reicht daher über die technische Ausgestaltung in den nachtechnischen Bereich.

Die Ansprüche 2 bis 4 stellen vorteilhafte Ausgestaltungen der erfindungsgemäßen Betonplatte dar. Anspruch 5 beinhaltet eine besonders günstige Ausbildung des Verbindungssteins zum Zusammenhalten mindestens zweier Betonplatten. Der Gegenstand des Anspruches 6 kennzeichnet die grundsätzliche Ausgestaltung des erfindungsgemäßen Bauwerkes. Die Ansprüche 7 und 8, 11 bis 14, 17 bis 19 und 23 kennzeichnen jeweils ein Bauwerk nach Anspruch 6, welches durch Zusammensetzen von Betonplatten und Verbindungssteinen nach einem der Ansprüche 1 bis 5 gebildet ist. Die Ansprüche 9, 10, 15, 16 sowie 20 bis 22 sind vorteilhafte Ausgestaltungen des nach dem vorangehenden Anspruch oder den vorangehenden Ansprüchen gekennzeichneten Bauwerkes, auf welchen bzw. auf welche der jeweilige Anspruch rückbezogen ist.

In Zusammenhang mit den verschiedenen Ausführungsformen von Bauwerken sei erwähnt, daß nach der DE-OS 3816066 bereits ein mehrwandiger, aus einer Mehrzahl von Bauelementen zusammensetzbarer Lagerbehälter und Wand-Bauelement zum Aufbau solcher Lagerbehälter bereits bekannt ist. Allerdings bezieht sich diese bekannte Lösung auf Großbehälter, so daß die eingangs genannten Maßnahmen auch auf die Ausgestaltung eines derartigen Lagerbehälters zutreffen. Allerdings ist aus dieser Druckschrift auch bekannt, daß die Hohlschale im senkrecht zur Längserstreckung bzw. Hauptachse gelegten Querschnitt die Form einer halben oder ganzen Sinuswelle, eines Kreissegmentes, eines Viertelkreises oder von zwei entgegengesetzt nach Art eines S zusammengesetzten Viertelkreises hat.

Aus der AT-PS 389729 ist weiters ein Zellensilo mit durch plattenförmige Bauelemente gebildeten Stützsäulen und Zellenwänden beschrieben, die sandwichartig zwischen Rändern bzw. Flanschen der Bauelemente eingeschlossen sind, wobei die Zellenwände aus einzelnen Platten bestehen, die an ihren Rändern flache Flansche aufweisen, mit denen sie zwischen die Ränder bzw. Flansche der Bauelemente der Stützsäulen unter Verschrauben eingesetzt sind. Dabei werden die

Stützsäulen mit einem Füllmaterial, beispielsweise Beton, gefüllt. Die beschriebene Ausgestaltung zeigt ebenfalls in Richtung der eingangs genannten Großbauwerke.

Ebenfalls eine Silokonstruktion zeigt das Dokument DD-96 622, bei welcher Konstruktion die Streifenfundamente für die Silolängswände betoniert werden und anschließend L-förmige Fertigteile und T-förmige Fertigteile in vorgeschriebener Weise miteinander verbunden und die Zwischenräume mit Beton ausgefüllt werden. Diese Konstruktion benötigt daher außer der Verwendung von Fertigteilen und Befestigungsmitteln auch die Verwendung von Flüssigbeton.

Bei der Ausgestaltung nach der US-A-4 031 678 ist eine Blockkonstruktion beschrieben, welche aus einzelnen Blockelementen derart aufgebaut ist, daß diese Elemente einerseits erhöhte Ansätze und andererseits vertiefte Aussparungen aufweisen, die miteinander derart in Eingriff bringbar sind, daß die einzelnen Blockelemente in der übereinander liegenden Reihe jeweils um eine Teilung versetzt sind. Des weiteren sind zur Aufnahme von Leitungen in den einzelnen Elementen Durchgänge vorgesehen, deren Herstellung mit zusätzlichem Kostenaufwand verbunden ist. Zum Zusammenhalten der übereinander angeordneten Elemente sind weiters vertikal verlaufende Bohrungen mit in diesen eingesetzten Verbindungsbolzen vorgesehen. Auch diese zusätzliche Mittel führen zum Mehraufwand beim Herstellen dieser Blockkonstruktion.

Die Ausgestaltung nach der US-A-5 402 609 ist hinsichtlich der miteinander in Verbindung tretenden Erhöhungen und Vertiefungen ähnlich dem vorher Beschriebenen. Des weiteren sind zum Heben der einzelnen Blöcke Kabel eingebettet, deren schleifenartiger Mittelabschnitt mit geeigneten Werkzeugen in Eingriff bringbar ist. Allein dieser Umstand zeigt, daß es sich dabei um Fertigbauteile für Großbetonkonstruktionen handelt, welche vom Gegenstand der Erfindung nicht erfaßt werden.

Die in dem Dokument CA-A-1 180 912 beschriebene Baukonstruktion aus Fertigteilen benötigt zur Verbindung der einzelnen Elemente die Verwendung eines deformierbaren Konststoffmateriales, eben ein solches Verbindungsmittel, welches bei dem Gegenstand der Erfindung keine Verwendung finden soll.

In Verbindung mit der Ausgestaltung des Bauwerkes nach Anspruch 23 wird zuzüglich auf die US PS 5.048.250 hingewiesen. Aus dieser Druckschrift ist bereits die Verwendung von Fertigteilen mit an ihren Stirnseiten ausgebildeten halbkreisförmigen Aussparungen bekannt, wobei allerdings diese Fertigteile aus einem Zement-Holzfasergemisch bestehen und mittels Verstärkungsstäben armiert werden. Zu diesem Zweck sind in den Fertigteilen auch Bohrungen ausgebildet, wobei die Bohrungen und die aus halbrohrartigen Elementen gebildeten Aufnahmestellen abwechselnd angeordnet werden müssen. Dies bedeutet bei der Herstellung der Fertigteile die Verwendung von zusätzlichen Einsätzen; darüber hinaus ist auch die Verwendung von Flüssigbeton oder Zement erforderlich. All diese notwendigen Maßnahmen erhöhen den Arbeits- und Materialaufwand.

Die Erfindung wird nun anhand der Zeichnung, die mehrere Ausführungsbeispiele zeigt, näher beschrieben. Hiebei zeigen:

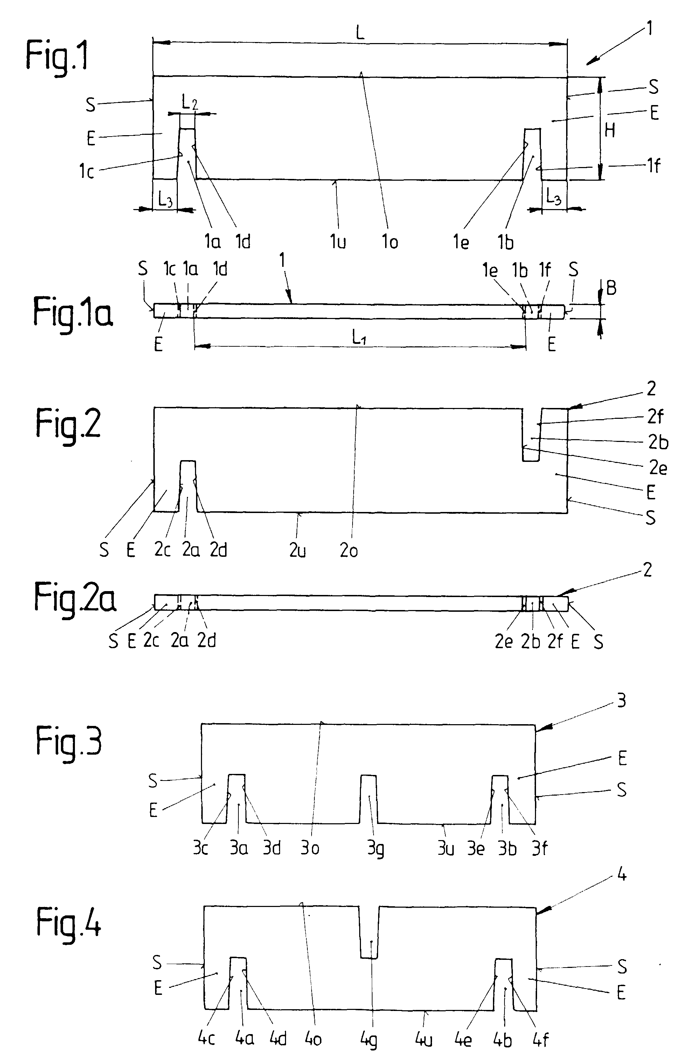

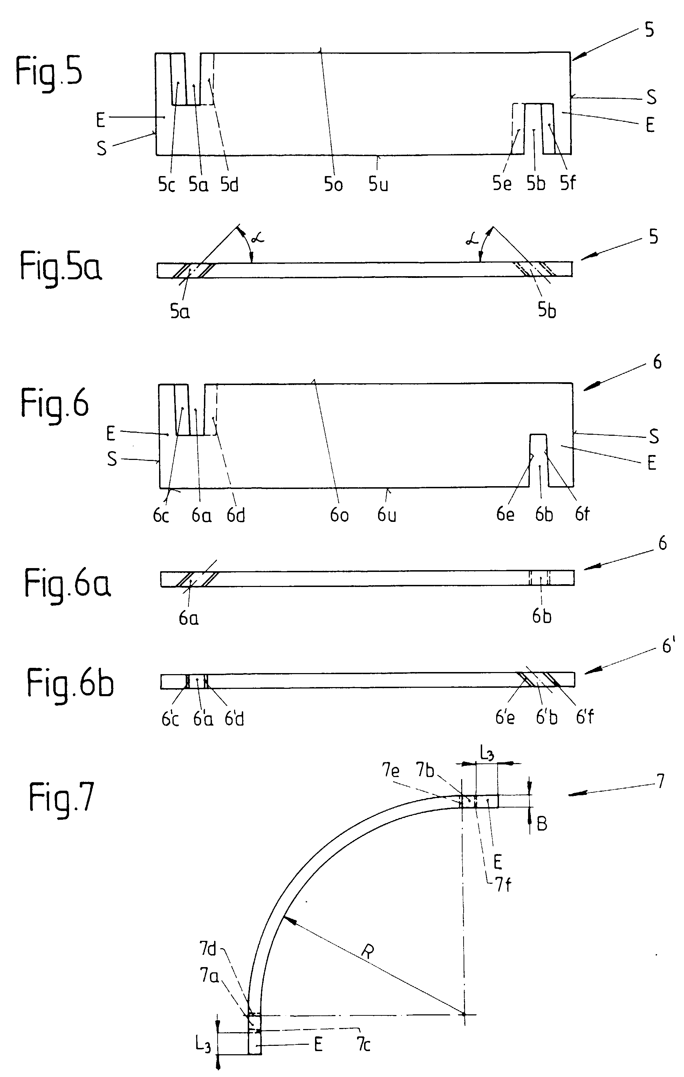

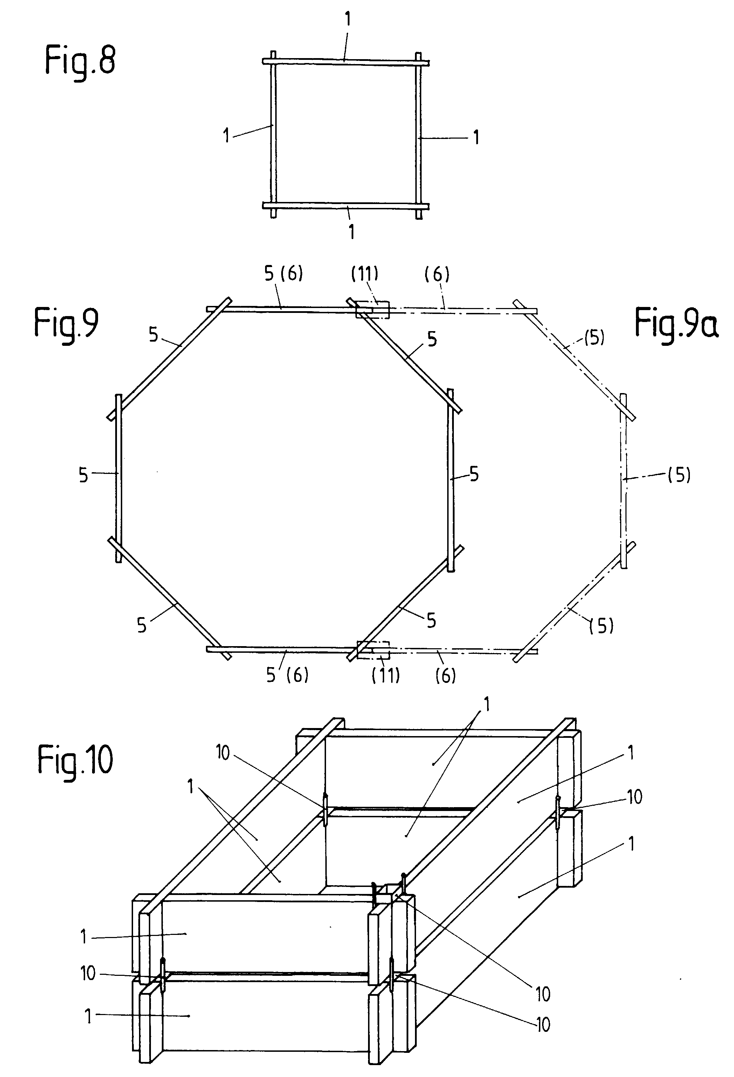

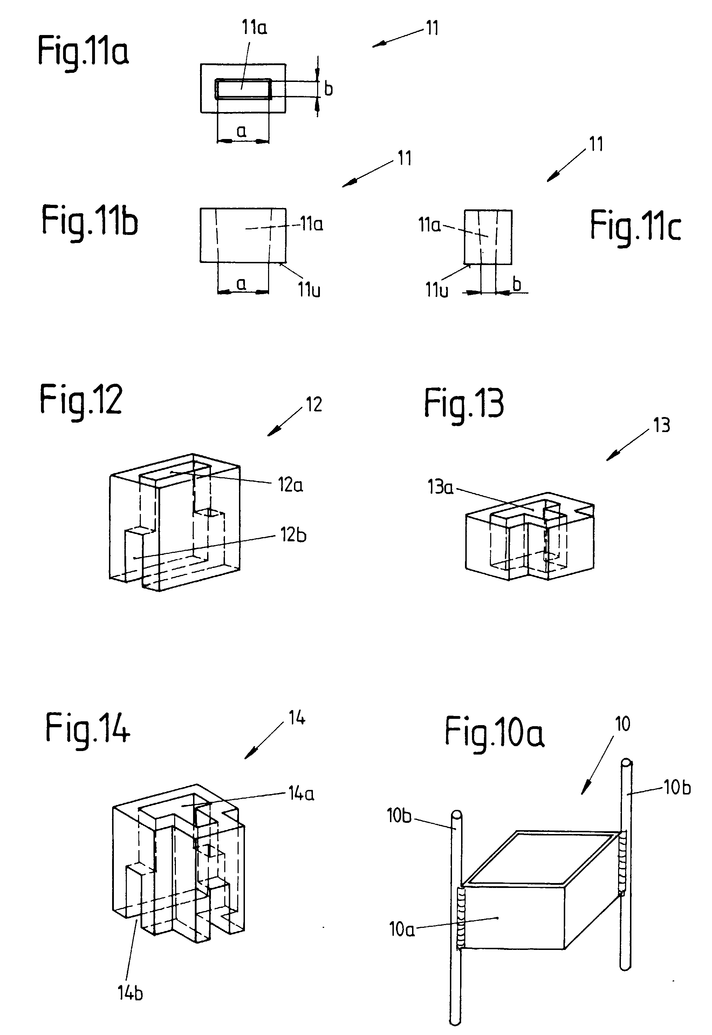

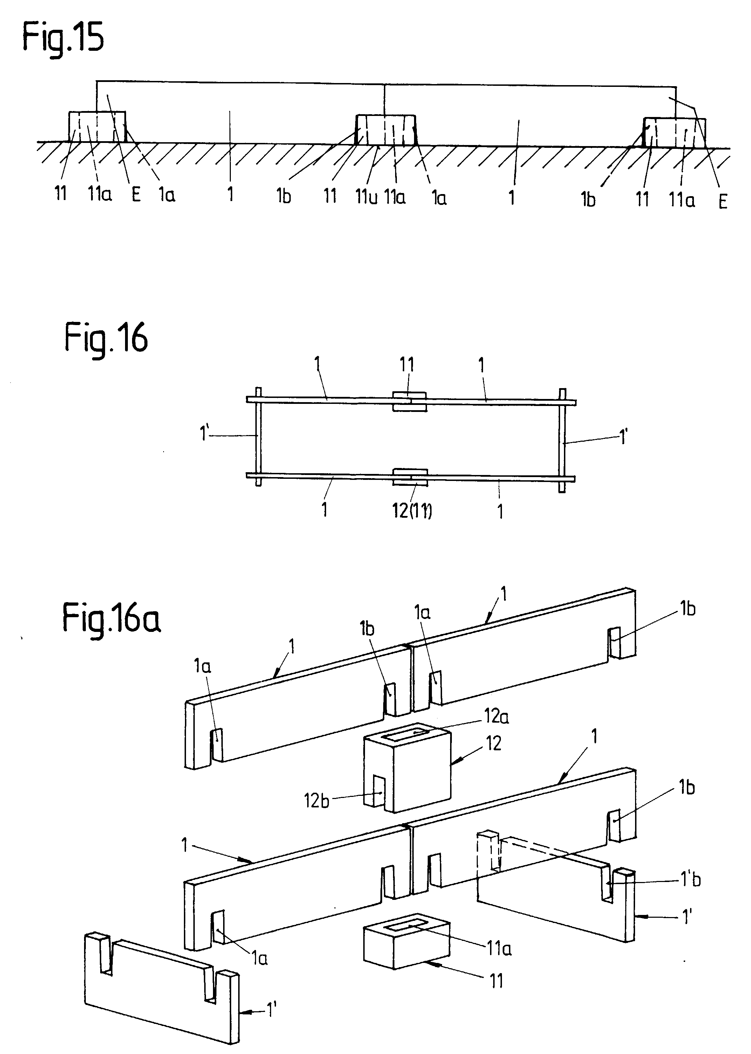

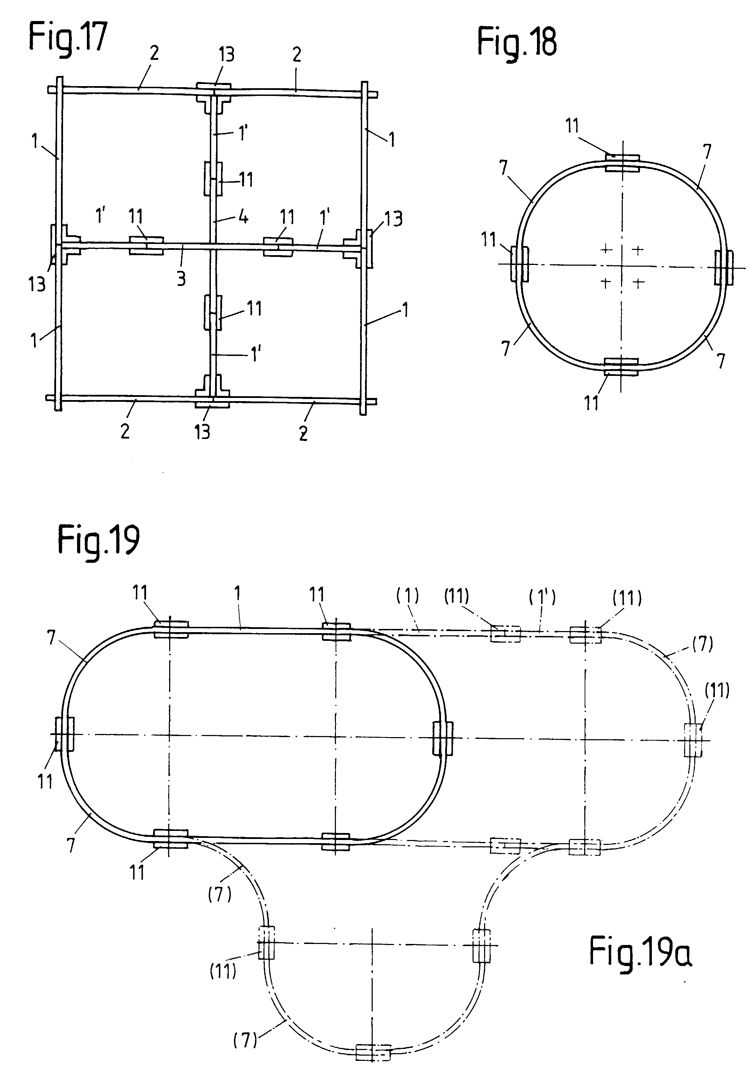

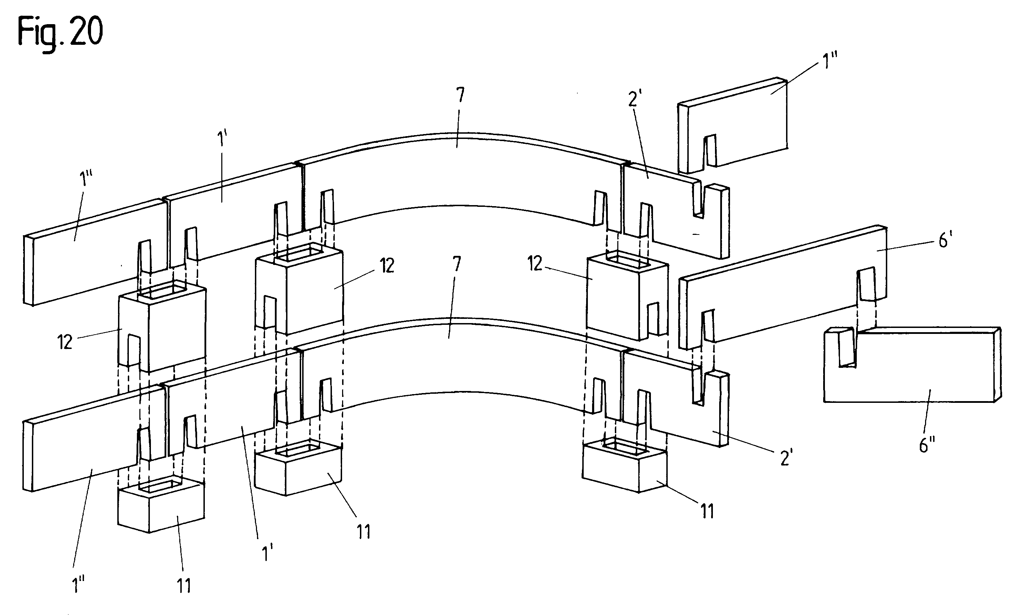

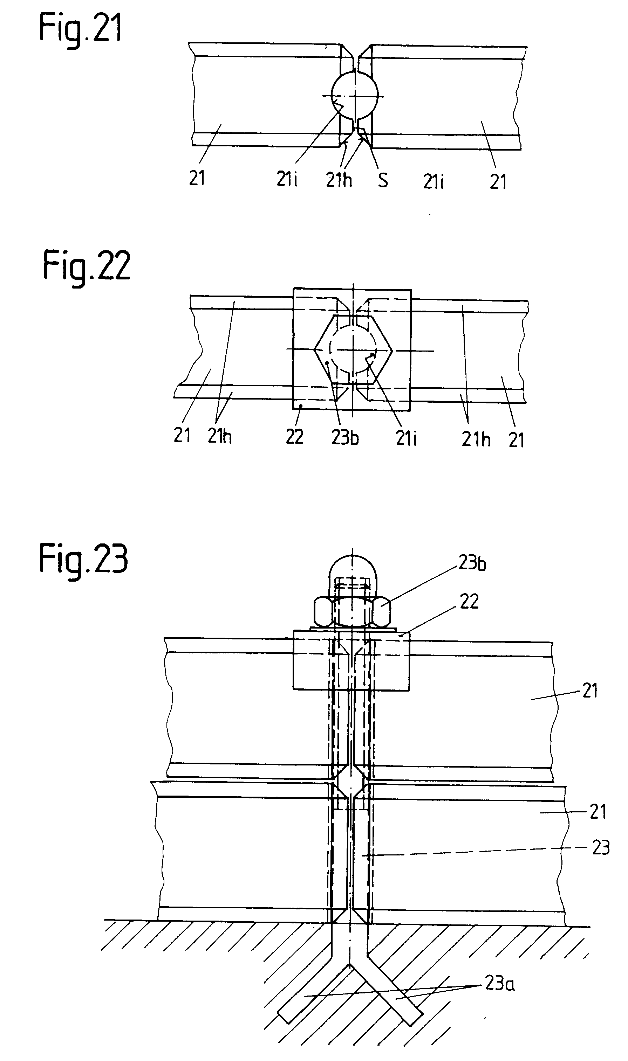

Die Figuren 1 und 1a eine erste Ausführungsform einer erfindungsgemäßen Betonplatte mit in gleicher Richtung weisenden Schlitzen, wobei die Fig. 1 eine Seitenansicht einer erfindungsgemäßen Betonplatte und die Fig. 1a eine Draufsicht auf diese Platte ist, die Figuren 2 und 2a einander zugeordneten Darstellungen ähnlich den Figuren 1 bzw. 1a einer zweiten Ausführungsform einer Betonplatte mit in entgegengesetzten Richtungen weisenden Schlitzen, die Fig. 3 eine dritte Ausführungsform einer Betonplatte, bei welcher drei Schlitze in die gleiche Richtung weisend ausgebildet sind, die Fig. 4 eine vierte Ausführungsform einer Betonplatte, bei der zwei Schlitze in die gleiche Richtung und der dritte, mittlere Schlitz in die entgegengesetzte Richtung weisend ausgebildet ist, wobei diese letzteren als Verbindungsplatten zum Erstellen von Kreuzungsbereichen verwendbar sind, die Figuren 5 und 5a eine fünfte Ausführungsform einer Betonplatte, mit zu deren Seitenfläche unter einem Winkel verlaufenden Schlitzen, die Figuren 6, 6a und 6b eine sechste Ausführungsform einer Betonplatte, bei welcher der eine Schlitz unter einem Winkel, der andere Schlitz hingegen unter 90 ° zur Seitenfläche ausgerichtet ist, die Fig. 7 eine Betonplatte in der Form eines Viertelringelementes, in Draufsicht, die Figuren 8, 9 und 9a mehreckige Bauelemente aus Betonplatten, wobei die Fig. 8 ein Viereck (Quadrat) aus Betonplatten gemäß den Figuren 1 und 2, die Fig. 9 in vollen Linien ein Achteck aus Betonplatten nach der Fig. 5 und die Fig. 9a anschließend an Fig. 9 in strichpunktlierten Linien eine aus Betonplatten nach den Figuren 5 und 6 zusammengebaute Variante hierzu, die Figuren 10 und 10a ein Bauwerk aus Betonplatten nach den Figuren 1 und 2 und unter Verwendung von Abstandhaltern in der Ausgestaltung nach der Fig. 10a, die Figuren 11a bis 14 als Verbindungssteine ausgestaltete Betonelemente, wobei in den Figuren 11a, 11b und 11c in einander zugeordneten Rissen ein Verbindungsstein zum Zusammenhalten von Betonplatten dargestellt ist, die Fig. 12 einen als Aufbaustein gestalteten Verbindungsstein für den Zusammenhalt mehrreihiger Anordnung von Betonplatten, die Fig. 13 einen in Draufsicht T-förmigen Verbindungsstein zum Verbinden dreier Betonplatten, die Fig. 14 einen doppel-T-förmigen Verbindungsstein zum Zusammenhalten mehrreihiger Betonplatten, die Fig. 15 ein Bauwerk aus Betonplatten mit Verbindungssteinen, in Seitenansicht, die Fig. 16 und 16a ein Bauwerk mit in mehreren Reihen übereinander angeordneten Betonplatten, wobei die Fig. 16 eine Draufsicht und die Fig. 16a ein Teil des Bauwerkes im Schrägriß sind, die Fig. 17 eine Boxanordnung aus Betonplatten mit Verbindungssteinen, Verbindungsplatten und T-förmigen Verbindungssteinen, in Draufsicht, die Fig. 18 eine Anordnung aus Viertelringelementen gemäß der Fig. 7 mit Verbindungssteinen, in Draufsicht, die Fig. 19 in vollen Linien eine ovale (pferderennbahn-ähnliche) Anordnung aus Viertelringelementen, Betonplatten und Verbindungssteinen, die Fig. 19a eine Variante zu Fig. 19, bei der mit strichpunktierten Linien eine anschließende Anordnung, bei der die Viertelringelemente in konkaver bzw. konvexer Lage abwechselnd angeordnet sind, dargestellt ist, die Fig. 20 einen mehrreihigen Aufbau von Betonplatten mit Aufbau-und Verbindungssteinen, in Explosionsdarstellung, die Figuren 21 bis 23 eine Verankerung für ein Bauwerk, bei der in der Fig. 21 die Betonplatten mit halbrohrförmigen Aussparungen aneinandergereiht dargestellt sind, die Fig. 22 die Verankerung in der Draufsicht mit aufgesetzter Befestigungsmutter und die Fig. 23 eine eingebaute Gewindestange mit Mauerpratzen in einem Betonboden.

In den Figuren 1 und 1a ist in der ersten Ausführungsform eine Betonplatte 1 mit jeweils zwei Schlitzen 1a und 1b abgebildet, wobei die Länge L der Betonplatte 1 100 cm beträgt. Die die einzelnen Schlitze 1a, 1b begrenzenden Innenwände 1c, 1d; 1e, 1f verlaufen - von der Unterseite 1u der einzelnen Betonplatten 1 her betrachtet in Richtung zum Inneren dieser Betonplatten hin - schräg verjüngend, wobei die Konizität der Schlitze 1a und 1b jeweils etwa 2 ° beträgt. Dabei liegt jeder Schlitz 1a, 1b mit seiner der Stirnseite S benachbarten Innenwand 1c, 1f in einem Abstand L₃ von der Stirnseite S der Betonplatte 1 und bestimmt dadurch einen Endabschnitt E der Betonplatte 1. Der Abstand der beiden inneren Innenwände 1d, 1e der beiden Schlitze 1a, 1b ist mit L₁ bezeichnet. Es ist weiters erkennbar, daß die einzelnen Schlitze 1a, 1b bis zur Hälfte der Höhe H der Betonplatte 1 reichen, wobei die Breite L₂ der Schlitze 1a, 1b in diesem Abschnitt gleich groß wie oder größer als die Breite B der Betonplatte 1 ist. Die Länge L dieser Betonplatten kann 50, 75, 150 oder bis zu 200 cm, die Höhe H 15 bis 40 cm, vorzugsweise 25 cm und die Breite B 3 bis 5, vorzugsweise 3,5 cm betragen, so daß bei Bedarf Bauwerke in unterschiedlichen Längen-, Höhen- und Breitenabmessungen erstellbar sind.

In den Figuren 2 und 2a ist eine Betonplatte 2 ebenfalls mit zwei Schlitzen 2a, 2b abgebildet, wobei die beiden Schlitze 2a, 2b einander entgegengesetzt gerichtet sind. Auf diese Weise wird eine Eckverbindung ermöglicht. Dabei greift die eine Betonplatte 2 nach der Fig. 2 mit ihrem Schlitz 2b in den Schlitz 2a der anderen Betonplatte 2 von unten und die selbe Betonplatte 2 mit ihrem Schlitz 2a in eine anschließende Aufnahme von oben ein. Sinngemäß können auch in diesem Fall Betonplatten ähnlicher Ausgestaltung in einer der oben angeführten Länge L, Höhe H und Breite B Verwendung finden;

Für ein Bauwerk, bei dem sich kreuzende Betonplatten Verwendung finden sollen, beispielsweise für eine Boxanordnung (vgl. Fig. 17), werden in diesem Abschnitt Betonplatten 3 und 4 verwendet, die in den Figuren 3 und 4 abgebildet sind. Es ist zu erkennen, daß die Betonplatten 3 und 4 jeweils drei Schlitze 3a, 3b, 3g bzw. 4a, 4b, 4g aufweisen, wobei die Schlitze 3a, 3b, 3g in den Betonplatten 3 in die gleiche Richtung weisen, wogegen bei der Betonplatte 4 zwei Schlitze 4a, 4b - ähnlich der Ausgestaltung nach der Fig. 1 - in die gleiche Richtung weisen, der dritte Schlitz 4g hingegen in die andere Richtung weist. Die Schlitze 3g, 4g sind, bezogen auf die beiden seitlichen Schlitze 3a, 3b bzw. 4a, 4b, mittig ausgebildet.

Die Figuren 5, 6, 6a und 6b zeigen Betonplatten 5 und 6 mit unter einem Winkel α schräg verlaufenden Schlitzen. Dabei ist es ersichtlich, daß bei einer Betonplatte 5 beide Schlitze 5a, 5b jeweils unter einem Winkel α von 45° verlaufen. Diese Schlitze 5a, 5b können, wie dargestellt, ähnlich der Fig. 2 gerichtet sein, sie können jedoch auch der Fig. 1 entsprechend in die gleiche Richtung verlaufen. Bei den Betonplatten 6, die gemäß der Fig. 9a als Verlängerungs-Zwischenstücke dienen, sind lediglich die mit den schräg anschließenden Betonplatten 5 in Verbindung stehenden Schlitze schräg gestaltet, die anderen Schlitze verlaufen hingegen, ihre Konizität beibehaltend, unter 90°. Derartig ausgestaltete Betonplatten sind - zum besseren Verständnis - zuzüglich aus den Figuren 6a und 6b erkennbar.
Die Verwendung derartiger Betonplatten wird anhand der Fig. 9a weiter unten beschrieben werden. Der Vollständigkeit halber sei erwähnt, daß auch in den Betonplatten 2 bis 6, ähnlich wie in der Betonplatte 1, sämtliche Schlitze ebenfalls konisch ausgebildet sind. Eine ausführliche Beschreibung und weitergehende zeichnerische Darstellung dürfte sich für den Fachmann erübrigen.

In der Fig. 7 ist eine als ein Viertelringelement 7 mit einem Radius R ausgebildete Betonplatte abgebildet, wobei die beiden Endabschnitte einen geraden Verlauf aufweisen. Verschiedene Bauwerke zeigen in diesem Zusammenhang die Figuren 18, 19 und 19a (s. weiter unten).

Ein aus den Betonplatten zusammengefügtes Bauwerk kann die verschiedensten Formen aufweisen. In einer ersten Ausgestaltung nach der Fig. 8 sind lediglich vier Betonplatten 1 gleicher Länge mit jeweils zwei Schlitzen 1a, 1b zusammengebaut, wobei die einander jeweils gegenüberliegenden Betonplatten 1 mit gleichgerichteten Schlitzen 1a, 1b, nämlich nach oben und nach unten weisend, angeordnet sind.

Dieses Bauwerk ist als ein Viereck beispielsweise für Beete oder zum Sammeln von Erde, Abfälle od. dgl. insbesondere in Kleingärten verwendbar, aber auch in größeren Gärtnereien für bestimmte Gemüse- oder Obstarten. Es ist auch leicht erkennbar, daß weil nach dem Zusammenbau das Bauwerk durch die Konizität der Schlitze 1a, 1b selbsttragend und selbsthaltend ist, kein Verbindungsmaterial Verwendung finden muß und somit auch ein Versetzen dieses Bauwerkes bei Bedarf leicht bewerkstelligt werden kann.

Ein anderes Bauwerk zeigt im Grundriß die Fig. 9. Hiebei finden Betonplatten 5 mit unter 45 ° verlaufenden Schlitzen 5a, 5b Verwendung. In der Fig. 9a ist eine Variante unter Einbau von Verlängerungs-Zwischenstücken 6 gezeigt. Der Aufbau der Betonplatten 5 bzw. 6 ist, wie bereits beschrieben wurde, aus den Figuren 5 und 6 erkennbar. Es ist nur verständlich, daß für ein solches Bauwerk Betonplatten nicht nur in der Länge der Grundeinheit, sondern auch in Halb- oder Dreiviertellänge Verwendung finden können.

Das in der Fig. 9 dargestellte Bauwerk kann sowohl als eine Einfriedung für ein Blumen- oder Gemüsebeet oder aber auch für einen Sandspielkasten dienen. Im letzteren Fall können die Betonplatten, zumindest an den inneren und oberen Flächenabschnitten, mit einem allfällige Anschläge dämpfenden Material, wie Gummi oder Kunststoff, abgedeckt oder beschichtet sein.

Eine übereinander liegende mehrreihige Anordnung kann, wie die Figuren 10 und 10a zeigen, auch so beschaffen sein, daß zwischen den einzelnen Reihen von Betonplatten 1 ein durch einen in seiner Gesamtheit mit 10 bezeichneten Abstandhalter gebildeter Belüftungsspalt 100 vorgesehen ist. Dieser Belüftungsspalt 100 kann durch verschiedene Maßnahmen gebildet werden. In der Ausgestaltung nach den Figuren 10 und 10a ist an den Kreuzungen zweier Betonplatten 1 ein Abstandhalter 10 vorgesehen, dessen näherer Aufbau in der Fig. 10a perspektivisch dargestellt ist. Dabei ist ein viereckiges Formrohr 10a vorgesehen, an dessen diametral gegenüberliegenden Ecken je ein Stahlstab 10b angeschweißt ist. Die beiden Stahlstäbe 10b umfassen jeweils zwei Betonplatten 1 von außen her, so daß ein festes Gebilde entsteht. Dabei bildet das Formrohr 10a ein Distanzstück, wodurch der vorangehend erwähnte Belüftungsspalt 100 entsteht. Wie aus der Fig. 10 erkennbar ist, werden die jeweils übereinander liegenden Abstandhalter 10 um 90° versetzt angeordnet.

Es ist aber auch eine andere Ausgestaltung denkbar, bei der ebenfalls zwei Stäbe vorgesehen sind, zwischen denen Pratzen angeordnet sind, welche als Abstandhalter dienen. Der Zusammenhalt ist ähnlich wie in der soeben beschriebenen Ausführungsform nach den Figuren 10 und 10a.

Zum Erstellen von Bauwerken gemäß der Erfindung werden außer den bereits beschriebenen Betonplatten aus Beton gefertigte Verbindungssteine verwendet. Einfache Verbindungssteine 11 sind in den Figuren 11a, 11b und 11c erkennbar, wobei die Fig. 11a die Draufsicht auf einen Verbindungsstein 11, die Fig. 11b eine Vorderansicht und die Fig. 11c eine Seitenansicht zeigen. Aus diesen Figuren ist ersichtlich, daß die Länge a der Aussparung 11a in jedem Verbindungsstein 11 an dessen Unterseite gemessen, gleich groß wie oder größer als die Summe der Länge L₃ der Endabschnitte E zweier miteinander zu verbindenden Betonplatten 1 ist, wobei die Länge L₃ dieser Endabschnitte E jeweils dem Abstand zwischen der Stirnseite S und der benachbarten Innenwand 1c, 1f des dieser Stirnseite S zugehörigen Schlitzes 1a, 1b der jeweiligen Betonplatte 1, an deren Unterseite 1u gemessen, entspricht. Weiters ist ersichtlich, daß die Breite der Aussparung 11a, an ihrer Unterseite gemessen, gleich groß wie oder größer als die Breite b der Endabschnitte E der miteinander jeweils zu verbindenden Betonplatten 1 ist. In der Fig. 12 ist ein Verbindungsstein 12 für mehrreihige Bauwerk-Varianten im Schrägriß dargestellt. Dabei ist es zu erkennen, daß der Verbindungsstein 12 in seiner oberen Hälfte in der Art des Verbindungssteines 11 mit einer Aussparung 12a ausgestaltet und in der unteren Hälfte mit einer durchgehenden Aussparung 12b versehen ist.

In den Figuren 13 und 14 sind T-förmige Verbindungssteine 13 und 14 jeweils im Schrägriß dargestellt. Dabei zeigt die Fig. 13 einen einfachen T-förmigen Verbindungsstein 13 mit einer Aussparung 13a und die Fig. 14 einen doppelten T-förmigen Verbindungsstein 14, wobei letzterer in seiner oberen Hälfte aus einem T-förmigen Verbindungsstein mit einer T-förmigen Aussparung 14a nach der Fig. 13 besteht und in der unteren Hälfte mit einer durchgehenden Aussparung 14b versehen ist.

In der Ausgestaltung nach der Fig. 15 ist ein längliches Gebilde dargestellt, bei dem die aneinandergereihten Betonplatten 1 mittels je eines Verbindungssteines 11 miteinander zusammengehalten sind und auch die freien Endabschnitte E der einzelnen Betonplatten 1 in einem Verbindungsstein 11 enden. Diese Ausgestaltung ist als Abgrenzung, zum Beispiel als Unterlage für einen Zaun od. dgl. besonders gut geeignet und kann ebenfalls bei Bedarf leicht abgebaut und auf einem anderen Platz aufgebaut werden. Des weiteren ist aus den Figuren 16 und 16a ein Bauwerk erkennbar, bei dem Betonplatten 1 und Verbindungssteine 11 parallel zueinander verlaufend und - wie aus der Fig. 16a erkennbar ist - zweireihig übereinander angeordnet und die voneinander beabstandeten freien Enden der Betonplatte 1 dieses Bauwerkes mit halblangen Betonplatten 1' zu einer Einfriedung zusammengefaßt sind.

Bei einer mehrreihigen Anordnung werden, wie in der Fig. 16a im Schrägriß dargestellt ist, als Aufbausteine 12 gestaltete Verbindungssteine verwendet. Solche Aufbausteine 12 liegen beispielsweise auf einem Verbindungsstein 11 auf und umfassen jeweils zwei übereinander angeordnete Betonplaten 1, so daß durch diese versetzte Anordnung ein stabiles Bauwerk entsteht. Selbstverständlich können Bauwerke nach den Figuren 8, 9 oder 15 ebenfalls in einer mehrreihigen Anordnung ausgestaltet sein.

Eine Anordnung eines Bauwerkes aus Fertigteilen zeigt die Fig. 17 in Draufsicht. Dabei sind Betonplatten 1 und 2, Betonplatten 1' mit verringerter Länge, sowie einfache Verbindungssteine 11 und T-förmige Verbindungssteine 13 erkennbar. Da die Ausgestaltung all dieser Fertigteile bereits vorangehend beschrieben wurde, dürfte sich ein weiteres Eingehen auf den Zusammenbau dieses Bauwerkes erübrigen.

In der Ausgestaltung nach den Figuren 18, 19 und 19a sind die Betonplatten, wie die Fig. 7 zeigt, als Viertelringelemente 7 ausgebildet, wobei gemäß Fig. 18 eine etwa kreisförmige Ausgestaltung und gemäß Fig. 19 eine ovale, in der Art einer Pferderennbahn ausgebildete Ausgestaltung dargestellt ist, wobei in beiden Fällen Verbindungssteine 11 Verwendung finden. In der Fig. 19a ist weiters erkennbar, daß gebogene Betonplatten, in der Draufsicht betrachtet, in konkaver und konvexer Anordnung aneinandergereiht angeordnet sind, wobei auch hier Verbindungssteine 11 verwendet werden. Auf diese Weise können beispielsweise Blumenbeete beliebiger Art aufgebaut werden.

Eine Einfriedung oder ein Behälter mit vieleckigem Grundriß ist ebenfalls möglich. Hiebei werden, je nach Bedarf, Betonplatten in voller, in halber oder dreiviertel Länge, mit Verbindungssteinen verwendet, wobei an den Eckstellen wiederum Betonplatten miteinander entgegengesetzt gerichteten Schlitzen ineinander greifend angeordnet sind. Da die Ausgestaltung der einzelnen Betonplatten bereits einleitend ebenso beschrieben wurde wie die der Verbindungssteine, dürfte sich ein weiteres Eingehen auf den Aufbau eines aus solchen Fertigteilen erstellten Bauwerkes erübrigen.

Die Fig. 20 zeigt ein Bauwerk in mehrreihigem Aufbau aus Betonplatten 1', 1" mit verringerter Länge, aus Betonplatten 6', 6", aus Viertelringelementen 7, Verbindungssteinen 11 und Aufbausteinen 12 in Explosionsdarstellung, im Schrägriß. Dabei sind an den Verbindungsstellen Fertigteile mit geraden und mit schräg verlaufenden Schlitzen erkennbar, wobei die Betonplatten 1", 6" als Endstücke jeweils nur einen Schlitz aufweisen. Auf diese Weise soll die Mannigfaltigkeit der erfindungsgemäßen Fertigteile zum Herstellen von Bauwerken unterschiedlichster Art veranschaulicht werden.

Um ein Bauwerk im Erdboden und/oder in einem Fußboden zu verankern, weisen die Betonplatten 21 nach der Fig. 21 an ihren Stirnseiten S jeweils eine, in der Draufsicht betrachtet, halbkreisförmige Aussparung 21i auf, so daß zwei miteinander aneinandergereihte Betonplatten 21 eine in der Draufsicht kreisförmige, der Länge nach rohrförmige Aufnahmestelle für eine Verankerung bilden. Dabei sind die Stirnseiten S der einzelnen Betonplatten 21 bei 21h schräg abgefast. Ein Bauwerk dieser Ausgestaltung ist in den Figuren 22 und 23 dargestellt, wobei zum Zusammenhalten zweier übereinander angeordneten Betonplatten 21 eine Gewindestange 23 mit Mauerpratzen 23a und mit einer Hutmutter 23b vorgesehen ist. Dabei ruht die Hutmutter 23b auf einem Stahlblech 22 auf. Somit können die beiden Betonplatten 21 fest zusammengehalten werden. Selbstverständlich ist auch ein mehrreihiger Aufbau aus derart gestalteten Betonplatten 21 möglich.

Die Erfindung ist nicht auf die dargestellten und beschriebenen Ausführungsformen beschränkt. Es gibt eine Anzahl von Varianten, die auch ohne eine Darstellung und gesonderte Beschreibung unter den Schutzumfang fallen sollen. So kann beispielsweise die Konizität der einzelnen Schlitze auch nur einseitig, d.h. keilartig ausgebildet sein, wobei in diesem Fall die äußere der die einzelnen Schlitze begrenzenden Seitenwände abgeschrägt ist. Auch die Abschrägung, bezogen auf die Seitenflächen der Betonplatten, muß nicht unter 45 ° verlaufen, vielmehr hängt das Ausmaß der Abschrägung der Schlitze von der gewünschten Anzahl des Vielecks ab. Des weiteren sei erwähnt, daß die angeführten Abmessungen jeweils mit im Betonbau üblichen Toleranzen zu verstehen sind. Dies gilt insbesondere für die Ausgestaltung der zur Aufnahme von Endabschnitten zweier oder mehrerer Betonplatten dienenden Ausnehmungen in den einzelnen Verbindungssteinen, welche Ausnehmungen an ihren Längsseiten, der Herstellung entsprechend, eine geringfügige Konizität (0,01 - 0,05) aufweisen. Auch die anderen Betonplatten können, ähnlich wie die Betonplatten 21, an ihren Stirnseiten mit einer Fase 21h versehen sein.

Es besteht weiters die Möglichkeit, Aufbausteine auch als reine Verbindungssteine zu verwenden, wenn nur eine einreihige Anordnung getroffen werden soll, beispielsweise nach der Fig. 16. In diesem Fall wird der Verbindungsstein 11 durch einen umgekehrten, d.h. mit seiner durchgehenden Aussparung 12b nach oben weisenden, Aufbaustein 12 ersetzt.

Eine andere Variante betrifft die Ausgestaltung der Begrenzungswände der rohrförmigen Aufnahmestelle für eine Verankerung. Dabei können diese Begrenzungswände in den einzelnen Betonplatten, in der Draufsicht betrachtet, dreioder mehreckig ausgebildet sein, wobei bei einer dreieckigen Ausbildung ein etwa karoartiger Durchlaß entsteht, dessen kleinster innerer Seitenabstand gleich groß wie oder größer als der Außendurchmesser der einzusetzenden Verankerung ist.

## Patentansprüche

1. Fertigteile für Bauwerke einfachen Aufbaus, welche Fertigteile als Betonplatten mit mindestens zwei, an der Längsseite der einzelnen Betonplatten ausgebildeten Schlitzen und/oder als Verbindungssteine gestaltet sind, **dadurch gekennzeichnet, daß**
zumindest die äußere der die einzelnen Schlitze (1a, 1b; 2a, 2b; 3a, 3b, 3g; 4a, 4b, 4g; 5a, 5b; 6a, 6b; 6'a, 6'b) begrenzenden Seitenwände (1c, 1f; 2c, 2f; 3c, 3f; 4c, 4f; 5c, 5f; 6c, 6f; 6'c, 6'f) jeder Betonplatte (1 bis 6) von der offenen Seite her und in der Richtung zum Inneren der Betonplatte hin verjüngend schräg verlaufend ausgebildet ist, daß die gegebenenfalls vorhandenen Verbindungssteine (11 bis 14) mit mindestens einer länglichen Aussparung ( 11a bis 14a) versehen sind, deren Breite (b) der Stärke (B) der einzelnen Betonplatten (1 bis 6) entsprechend bemessen ist, wobei die schmalseitigen Begrenzungswände jeder Aussparung dem Verlauf der inneren Seitenwände in den Schlitzen entsprechend abgeschrägt sind, daß die einzelnen Betonplatten (1 bis 6) bis zu 200 cm lang sind, wobei das Verhältnis Höhe:Länge 7,5% bis 80%, vorzugsweise 25% bis 50% beträgt, und daß einzelne Betonplatten (1 bis 6) in 50, 75, 100 und 150 cm, vorzugsweise in 50 und 100 cm Längenabschnitten, mit 15 bis 40 cm; vorzugsweise mit 25 cm Höhen- und 3 bis 5, vorzugsweise 3,5 cm Breitenabmessungen gefertigt sind, wobei die 100 cm langen Betonplatten eine Grundeinheit bilden (Fig. 1 bis 6 und 11a bis 14).

2. Betonplatte nach Anspruch 1, **dadurch gekennzeichnet, daß**
in den einzelnen Betonplatten (1 bis 6) jeder Schlitz (1a, 1b; 2a, 2b; 3a-3c; 4a-4c; 5a, 5b; 6a,6b) - in Höhenrichtung betrachtet - zumindest bis zur Mitte der jeweiligen Betonplatte (1- 6) reicht und eine Konizität von 0,5 bis 4°, vorzugsweise 2° aufweist, und daß einzelne Schlitze (5a, 5b; 6a), bezogen auf die Seitenflächen der Betonplatten (5, 6), gegebenenfalls unter einem Winkel α abgeschrägt sind (Fig.1 bis 6).

3. Betonplatte nach Anspruch 1 oder 2, **dadurch gekennzeichnet, daß**
jene Betonplatten (2, 5, 6), welche für den Zusammenbau an Eckstellen eines Bauwerks vorgesehen sind, mit dem einen Schlitz (2b, 5a, 6a) nach oben und mit dem anderen Schlitz (2a, 5b, 6b) nach unten weisend ausgebildet sind, und jene Betonplatten (3, 4), welche an Kreuzungsstellen eines Bauwerks vorgesehen sind, als Verbindungsplatten (3, 4) mit drei Schlitzen (3a, 3b, 3g; 4a, 4b, 4g) versehen sind, von denen zwei Schlitze (3a, 3b; 4a, 4b) seitlich und der dritte Schlitz (3g; 4g) mittig ausgebildet sind bzw. ist, wobei in der einen Verbindungsplatte (3) alle drei Schlitze (3a, 3b, 3g) in die gleiche Richtung weisend und in der anderen Verbindungsplatte (4) die zwei seitlichen Schlitze (4a, 4b) in die gleiche Richtung weisend verlaufen und der dritte, mittlere Schlitz (4g) in die andere Richtung weisend verläuft (Figuren 2, 3 und 4).

4. Betonplattte nach einem der Ansprüche 1 bis 3, **dadurch gekennzeichnet, daß**
an der Stirnseite jeder Betonplatte (21), wie an sich bekannt, eine durchgehende, halbrohrartige Aussparung (21a) ausgebildet ist, welche im Zusammenbau mit der halbrohrartigen Aussparung (21'a) einer anschließenden
Betonplattte (21') eine Aufnahmestelle für ein Versteifungselement bildet, und daß der die halbrohrartige Aussparung aufnehmende Abschnitt jeder Betonplatte in Richtung zu dieser Aussparung hin weisend abgeschrägt ist (Fig.21 bis 23).

5. Verbindungsstein zum Zusammenhalt mindestens zweier Betonplatten nach einem der Ansprüche 1 bis 5, **dadurch gekennzeichnet, daß**
die Länge (a) der Aussparung (11a bis 14a) in jedem Verbindungsstein (11 bis 14), an dessen Unterseite gemessen, gleich groß wie oder größer als die Summe der Länge (L3) der Endabschnitte (E) zweier miteinander zu verbindenden Betonplatten (1 bis 4, 6) ist, wobei die Länge (L3) dieser Endabschnitte (E) jeweils dem Abstand zwischen der Stirnseite (S) und der benachbarten Innenwand (1c; 1f; 2c; 3c; 3f; 4c; 4f; 6f; 6'c) des dieser Stirnseite (S) zugehörigen Schlitzes (1a; 1b; 2a; 3a; 3b; 4a, 4b; 6b, 6'a) der jeweiligen Betonplatte (1 bis 4, 6), an deren Unterseite (1u) gemessen, entspricht, und daß die Breite (b) der Aussparung (11a bis 14a) in jedem Verbindungsstein (11 bis 14), an dessen Unterseite (11u) gemessen, gleich groß wie oder größer als die Breite (B) der Endabschnitte (E) der miteinander jeweils zu verbindenden Betonplatten (1 bis 4, 6) ist (Figuren 1; 11a-11c; 12-14).

6. Bauwerk, welches durch Zusammensetzen von Betonplatten nach einem der Ansprüche 1 bis 4, gegebenenfalls unter Verwendung von Verbindungssteinen nach A5, gebildet ist, wobei - in zusammengefügtem Zustand mindestens zweier Betonplatten betrachtet - mit jedem Schlitz einer Betonplatte ein Schlitz einer anschließenden Betonplatte in Eingriff steht, **dadurch gekennzeichnet, daß**
die miteinander durch ihre ineinander greifenden Schlitze zumindest zu einer Reihe zusammengefügten Betonplatten (1) mit den gegebenenfalls verwendeten Verbindungssteinen (11) untereinander ausschließlich durch Formschluß zusammengehalten sind, wobei das Bauwerk vorzugsweise eine geschlossene Einheit (Einfriedung) bildet (Fig. 8 bis 20).

7. Bauwerk nach Anspruch 6, **dadurch gekennzeichnet, daß** vier Betonplatten (1) gleicher Längenabmessung (L), Höhe (H) und Breite (B), in der Draufsicht betrachtet, in Form eines Quadrats zusammengefügt sind, wobei die einander paarweise jeweils gegenüberliegenden Betonplatten (1) mit nach oben bzw. nach unten weisenden Schlitzen (1a, 1b) angeordnet sind (Fig. 8).

8. Bauwerk nach Anspruch 6, welches aus Betonplatten nach einem der Ansprüche 1 bis 3, gebildet ist, **dadurch gekennzeichnet, daß** Betonplattten (1) mindestens in zwei übereinander liegenden Reihen angeordnet sind, und daß zwischen den übereinander liegenden Betonplatten (1) Abstandhalter (10) vorgesehen sind, durch welche zwischen den übereinander liegenden Betonplatten (1) ein Belüftungsspalt (100) gebildet ist (Fig. 10).

9. Bauwerk nach Anspruch 8, **dadurch gekennzeichnet, daß**
die Abstandhalter (10) durch im Kreuzungsbereich jeweils zweier Betonplatten (1) vorgesehene Pratzen oder Formrohre (10a) gebildet sind, welche mit zwei, einander diametral gegenüberliegenden Stäben (10b), vorzugsweise aus einem Stahlmaterial, fest verbunden, beispielsweise verschweißt, sind, welche Stäbe (10b) an den einzelnen Eckabschnitten der beiden Betonplatten, in Höhenrichtung betrachtet jeweils unter Zwischenschaltung des zugehörigen Pratzens oder Formrohres (10a), abgestützt sind (Fig. 10 und 10a).

10. Bauwerk nach Anspruch 9, **dadurch gekennzeichnet, daß**
die beiden Stäbe (10b) zweier übereinander liegender Abstandhalter (10), in der Draufsicht betrachtet, relativ zueinander um 90° versetzt angeordnet sind.

11. Bauwerk nach Anspruch 6, welches aus Betonplatten und Verbindungssteinen nach einem der Ansprüche 1 bis 3 und 5 gebildet ist, **dadurch gekennzeichnet, daß**
der an den Anschlußstellen jeweils zweier Betonplattten (1) angeordnete Verbindungsstein (11) mit seiner Aussparung (11a) die Endabschnitte (E) der beiden ihm zugeordneten Betonplatten (1 bis 6) aufnimmt, und daß gegebenenfalls auch an den freistehenden Endabschnitten (E) einzelner Betonplatten (1) zur Aufnahme weiterer Betonplatten oder Versteifungselemente ein Verbindungsstein (11) vorgesehen ist (Fig. 15 und 16).

12. Bauwerk nach Anspruch 6, welches aus Betonplatten und Verbindungssteinen nach einem der Ansprüche 1 bis 3 und 5 gebildet ist, **dadurch gekennzeichnet, daß**
in zwei einander gegenüberliegenden und parallel zueinander verlaufenden Reihen mehrere Betonplatten (1) gleicher Länge und Anzahl mittels Verbindungssteinen (11) aneinandergefügt angeordnet und in Querrichtung zu dieser Anordnung mittels mindestens zweier, voneinander in der gewünschten Länge beabstandeten, vorzugsweise halblangen Betonplatten (1) miteinander zu einer, in der Draufsicht betrachtet, länglichen Einfriedung verbunden sind (Fig. 16 und 16a).

13. Bauwerk nach Anspruch 6, welches aus Betonplatten und Verbindungssteinen nach einem der Ansprüche 1 bis 3 und 5 gebildet ist, vorzugsweise Bauwerk nach Anspruch 11 oder 12, **dadurch gekennzeichnet, daß**
Betonplatten (1) mindestens in zwei übereinander liegenden Reihen angeordnet sind, wobei an den Anschlußstellen zweier übereinander liegender Betonplatten als Aufbausteine (12) gestaltete Verbindungssteine vorgesehen sind, die, in Höhenrichtung betrachtet, mit jeweils zwei Paaren von übereinanderliegenden Betonplatten in (1) Eingriff stehen, wobei jeder Aufbaustein (12) mit einer in seiner unteren Hälfte ausgebildeten Aussparung (12b) mit den beiden nebeneinander liegenden unteren Betonplatten (1) in Eingriff steht und in seine in der oberen Hälfte ausgebildete Aussparung (12a) die beiden oberen Betonplatten (1) mit ihren einander zugewandten Endabschnitten (E) eingreifen, und daß die Aufbausteine (12) vorzugsweise jeweils auf Verbindungssteinen (11) aufliegen (Fig. 16 und 16a).

14. Bauwerk nach Anspruch 6 aus Betonplatten nach einem der Ansprüche 1 bis 3, **dadurch gekennzeichnet, daß**
das Bauwerk einen Grundriß eines vorzugsweise regelmäßigen Vielecks aufweist, bei dem Betonplatten (5, 6) mit unter einem spitzen Winkel α abgeschrägten Schlitzen vorgesehen sind, wobei die Größe des Winkels α der einzelnen Abschrägungen dem jeweils herzustellenden Vieleck entsprechend bemessen ist.

15. Bauwerk nach Anspruch 6 und 14, **dadurch gekennzeichnet,** daß
Betonplatten (5) mit Schlitzen (5a, 5b) vorgesehen sind, deren Winkel α um 45° abgeschrägt sind, und daß diese Betonplatten (5) mit ihren nach oben und nach
unten offenen Schlitzen ineinandergreifend - in der Draufsicht betrachtet - eine achteckförmige Einfriedung bilden (Fig. 9).

16. Bauwerk nach Anspruch 6 und 14, **dadurch gekennzeichnet, daß**
an je eine Betonplatte (6) mindestens eines Paares von einander gegenüberliegenden und parallel zueinander verlaufenden Betonplatten (6) mit jeweils einem abgeschrägten Schlitz (6a) je eine als ein Verlängerungs-Zwischenstück dienende Betonplatte ebenfalls nur mit einem abgeschrägten Schlitz angeschlossen ist, wobei die beiden Betonplatten (6a) an ihren Verbindungsstellen über ihre unter 90° verlaufenden Schlitze (6b) mit dem jeweils zugeordneten Verbindungsstein (11) miteinander verbunden sind (Fig.9a).

17. Bauwerk nach Anspruch 6, welches aus Betonplatten nach einem der Ansprüche 1 bis 3 und 5 gebildet ist, **dadurch gekennzeichnet, daß**
das Bauwerk als eine Einfriedung mit einem, in der Draufsicht betrachtet, unregelmäßigen Vieleck gebildet ist, wobei sich abwechselnd gerade Betonplatten mit langen oder mit dreiviertel oder mit halben Abschnitten und mit Eckteilen aneinanderschließen, und daß die aneinander anschließenden Betonplatten mittels Verbindungssteine und - bei einer mehrreihigen Anordnung - auch mittels Aufbausteine miteinander verbunden sind.

18. Bauwerk nach Anspruch 6, welches aus Betonplatten und Verbindungssteinen nach einem der Ansprüche 1 bis 3 und 5 gebildet ist, **dadurch gekennzeichnet, daß**
an den Kreuzungsstellen dreier Betonplatten (1) in der Draufsicht T-förmige Verbindungssteine (13) vorgesehen sind, deren Aussparung ebenfalls T-förmig gestaltet ist, die jeweils mit allen drei Betonplatten in Eingriff stehen, wobei in den Balken des T jeweils zwei Endabschnitte (E) und in den Schaft des T ein Endabschnitt (E) der miteinander verbundenen Betonplatten (1) eingreift (Fig. 17).

19. Bauwerk nach Anspruch 6, welches aus Betonplatten und Verbindungssteinen nach einem der Ansprüche 1 bis 3 und 5 gebildet ist, **dadurch gekennzeichnet, daß**
zumindest ein Teil der Betonplatten. (7; 20a), in deren Längsrichtung betrachtet, gekrümmt oder gebogen ausgebildet ist, wobei die Krümmung vorzugsweise einem Viertelring mit einem Radius (R) entspricht, und daß die beiden Endabschnitte dieser Betonplatten (7; 20a) einen geraden Verlauf aufweisen, wobei die Endabschnitte zweier aneinander anschließender Betonplatten (7) miteinander mittels Verbindungssteine (11) verbunden sind (Fig.7; 18 bis 20).

20. Bauwerk nach Anspruch 19, **dadurch gekennzeichnet, daß**
die einzelnen als Viertelringelemente (7) ausgebildeten Betonplatten miteinander mittels Verbindungssteine (11) verbunden sind, und daß das Bauwerk eine geschlossene - in der Draufsicht betrachtet vorzugsweise eine etwa kreisförmige - Einfriedung bildet (Fig. 18).

21. Bauwerk nach Anspruch 19 oder 20, **dadurch gekennzeichnet, daß**
zwischen Viertelringelementen (7) Betonplatten (1) mit zwei geradlinig verlaufenden, jeweils in einer Ebene liegenden **Seitenflächen** angeordnet sind, wobei die Anordnung dieser letzteren, bezogen auf die Längsmittelebene des Bauwerks, symmetrisch ist, und daß die Viertelringelemente (7) und Betonplatten (1) mittels Verbindungssteinen (11) miteinander verbunden sind.(Fig.19).

22. Bauwerk nach einem der Ansprüche 19 bis 21, **dadurch gekennzeichnet, daß**
gebogene Betonplatten, in der Draufsicht betrachtet, in konkaver und konvexer Anordnung abwechselnd aneinandergereiht angeordnet sind (Fig.19a).

23. Bauwerk nach Anspruch 6, welches aus Betonplatten nach einem der Ansprüche 1 bis 4 gebildet ist, und welches im Erdboden oder in einem beispielsweise aus einer Beton- und/ oder Stahlplatte gefertigten Fußboden verankert ist, **dadurch gekennzeichnet, daß**
übereinander liegend mindestens zwei Reihen von Betonplatten (21) vorgesehen sind, die an den Verbindungsstellen mit ihren im Querschnitt vorzugsweise halbkreisförmigen Aussparungen (21i) eine rohrartige Aufnahmestelle bilden, und daß die jeweils übereinander liegenden Aufnahmestellen von einer Gewindestange (23) durchsetzt sind, welche mit ihrem unteren Endabschnitt als eine Mauerpratze (23a) ausgebildet ist, und welche auf ihrem oberen, freien Endabschnitt eine Schraubenmutter, vorzugsweise eine Hutmutter (23b), trägt, die sich unter Zwischenschaltung eines Stahlbleches (22) auf der oberen Betonplatte abstützt (Fig.21 bis 23).
